# EUROPEAN PATENT APPLICATION

(11) **EP 0 672 848 A1**
(43) Date of publication of application: **20.09.1995**
(21) Application number: 95300055.1
(22) Date of filing: 05.01.1995
(51) Int. Cl.: F16J 3/04

(54) **Protective bellows**

(30) Priority: 24.02.1994 GB 9403583
(71) Applicant: DRAFTEX INDUSTRIES LIMITED, Edinburgh EH3 6YY, Scotland (GB)
(72) Inventor: Bouhour, Jean Luc, F-44000 Nantes (FR); Houis, Jacques, F-44470 Thouare sur Loire (FR)
(74) Representative: Foster, David Martyn

(57) **Abstract**

A protective bellows for protecting a universal joint (for example) in a front wheel drive motor vehicle transmission system has a collar (16) adapted to be clamped around a mounting surface such as the casing of the universal joint. The outer end of the collar (16) is provided with four stubs (30) positioned 90° apart around the circumference of the collar. Each stub has an outwardly directed chamfered surface (34) which extends from a diameter (A) less than the internal diameter of the clamp in its untightened state to a diameter (B) which is greater than the internal diameter of the clamp in that state. This chamfered surface facilitates mounting of the clamp onto a clamp-receiving surface (28) on the collar. In addition, each stub (30) has an inwardly directed chamfered surface (38) which makes contact with the circumferentially extending edge of the casing or mounting member to which the collar is to be attached and facilitates the mounting of the collar thereon with the clamp in position. The clamp is then tightened.

## Description

The invention relates to protective bellows. One form of protective bellows to be described in more detail below is for protecting universal joints in motor vehicle front wheel drive transmission systems.

According to the invention, there is provided a protective bellows, having a collar at an end of the bellows for attaching that end to a mounting member by means of a tightenable surrounding clamp for fitting around an outer surface of the collar, the outer surface being positioned inboard of the adjacent end of the bellows, the collar being provided at at least one circumferential location with an outwardly facing chamfered surface extending from the said end towards the said surface of the collar but inclined in a radially outward direction for contacting the clamp and guiding it onto the said outer surface of the collar.

According to the invention, there is further provided a protective bellows, having a collar at an end thereof for attaching that end to a mounting member by means of a tightenable surrounding clamp for fitting around an outer surface of the collar, the said surface being provided with a plurality of angularly separated stubs adjacent but inboard of the end of the bellows and extending radially outward of the outer surface for locating the untightened collar thereon.

Forms of protective bellows embodying the invention will now be described, by way of example only, with reference to the accompanying diagrammatic drawings in which:
Figure 1 is a side elevation, partly in cross-section, of the bellows showing its general form;
Figure 2 is a partial cross-section corresponding to Figure 1 and showing the process of fitting a clamp in position on a collar at one end of the bellows;
Figure 3 shows the clamp of Figure 2 fitted in position on the collar;
Figure 4 is a partial cross-section corresponding to Figures 1,2 and 3 and showing the bellows collar of Figure 3, with the clamp in position thereon, being fitted over a casing;
Figure 5 corresponds to Figure 4 but shows the collar and clamp fitted in position on the casing;
Figure 6 corresponds to Figure 5 but shows the clamp tightened down onto the collar;
Figure 7 is an enlarged view of part of the collar to explain its construction in more detail;
Figure 8 is a diagrammatic cross-section on the line VIII-VIII of Figure 2;
Figure 9 is an enlarged view of part of the collar at the opposite end of the bellows; and
Figures 10 and 11 correspond to Figure 9 but show modifications.

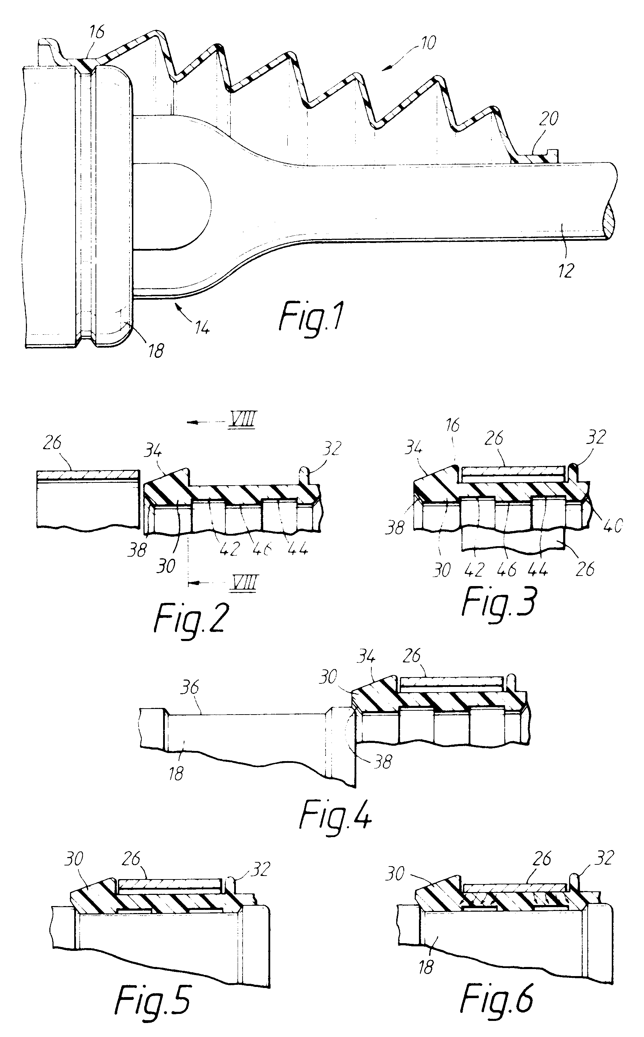

Figure 1 shows a protective bellows 10 for protecting an end of a drive shaft 12 of the front wheel drive transmission of a motor vehicle. The shaft is connected by a universal joint shown generally at 14 to the output of the gearbox and differential assembly.

One end of the bellows 10 has an integral fixing collar 16 which fits over the casing 18 at the corresponding end of the drive shaft 12. At the other end of the bellows, it has a fixing collar 20 which surrounds the shaft 12. Figure 1 is intended to illustrate the collars 16 and 20 only generally. They are clamped in position by means of circumferentially extending clamping clips, not shown.

Figure 2 is an enlarged view showing part of the collar 16, together with part of its circumferentially extending clamp 26 which is in the form of a metal band. This is to be placed over and around the collar 16 and then tightened so as to clamp the collar around the outside of the casing 14. Various forms of clamp, and tightening mechanisms for them, are known.

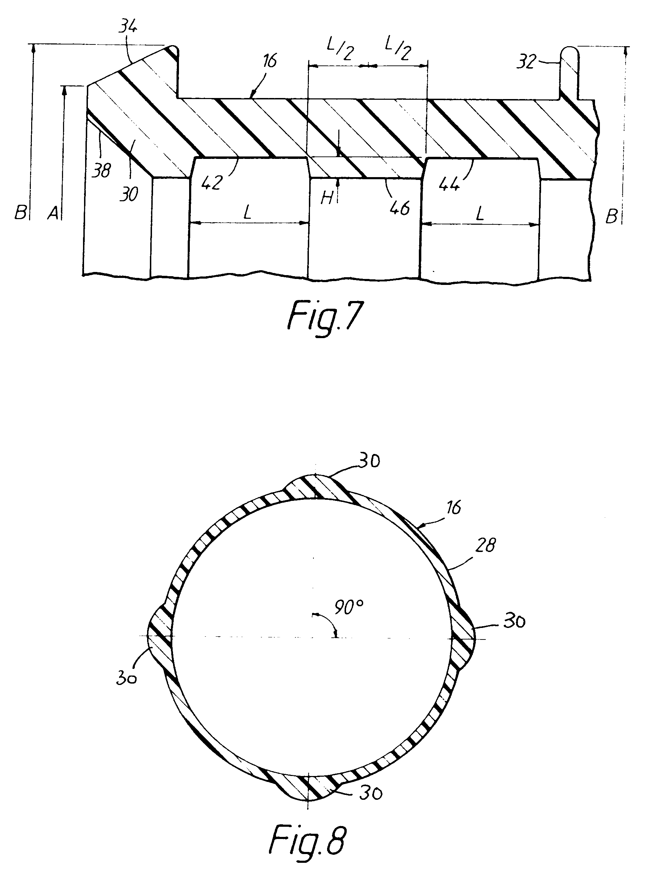

As shown in Figure 2, the collar 16 defines a clamping surface 28 which, in the sectional plane illustrated in Figure 2, extends between an outer stub 30 and an inner stub 32. There are four such outer stubs 30 arranged at 90° intervals around the periphery of the surface 28 as shown in Figure 8, and each of these outer stubs 30 is aligned with an inner stub 32.

When the collar 16 is to be mounted in position on the casing 18 (Fig. 1), the first step is to mount the clamp 26 in position on the collar. Figure 2 shows the clamp 26 being offered up to the collar 16, and Figure 3 shows the clamp in position on the collar. This mounting process is facilitated by the chamfered leading edge 34 of the outer stub 30, as will be described in more detail below. Thus, the internal diameter of the clamp 26 is sized to match the diameter of the surface 28 of the collar. The chamfered leading edge 34 of each of the outer stubs 30 facilitates the flexing of the material of the collar so as to allow the clamp to move into the position shown in Figure 3.

The next stage in the fitting process is to mount the bellows, with the clamp 26 in position thereon, onto the outer surface of the casing 18. This process is shown in Figures 4 and 5, Figure 4 showing the first stage in which the collar 16 with the clamp 26 thereon is offered up to the casing 18, and Figure 5 showing the collar and clamp fitted into position. As shown in Figure 4, the outer surface of the casing 18 is formed with a shallow groove 36. In addition, the leading edge of each outer stub 30 is provided with a second chamfer 38 which is downwardly directed and eases the fitting of the collar onto the casing 18.

The groove 36 in the casing 18 is sized to locate the collar 16, the collar being located by the engagement of the chamfer 38 with one edge of the groove 36 and by engagement of a further chamfer 40 with the other edge of the groove.

In Figures 2 to 5, the clamp is shown in its untightened state.

As shown in Figures 2 to 5, the inner surface of the collar 16 is provided with grooves 42 and 44 separated by a central ridge 46. Figure 6 shows the collar 36 clamped in position on the casing 18 by tightening of the clamp 26.

Figure 7 shows part of the collar 36 in greater detail. The diameters A and B are arranged to be such that the internal diameter of the clamp 26 (before it is tightened) is greater than A but less than B. The angle of the chamfer 38 is arranged to lie between 15° and 35°.

Figure 7 also shows that the width of each slot 42, 44 is the same as the width of the ridge 46, the ridge 46 being positioned substantially centrally of the width of the groove 28.

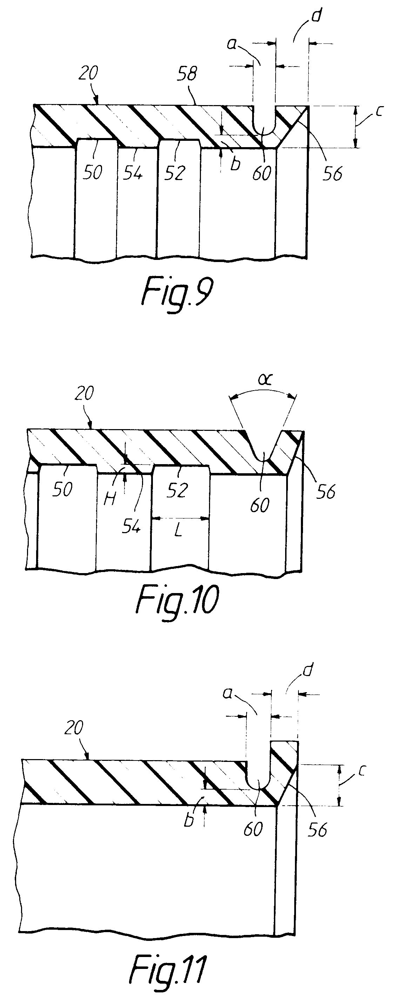

Figure 9,10 and 11 show different forms for the collar 20 at the other end of the bellows (Fig. 1).

Grooves 50 and 52 are provided on the underside of the collar and are separated by a ridge 54.

The outer end of the collar 20 is provided with a chamfer 56, while the surface 58 of the collar has a groove 60. In the forms shown in Figures 9 and 11, the slot 50 has parallel sides whereas in the form shown in Figure 10 it has outwardly angled sides. Advantageously, the dimensions a,b,c and d shown in Figures 9,10 and 11 all lie between one millimetre and three millimetres. These dimensions, together with the provision of the chamfer 56, facilitate the removal of the bellows from the mould after injection blow-moulding.

The collar 20 is fitted in position onto the shaft 12 (Fig. 1) using a clamp of the same type as the clamp 26.

## Claims

1. A protective bellows, comprising a collar (16) at an end of the bellows (10) for attaching that end to a mounting member (18) by means of a tightenable surrounding clamp (26) for fitting around an outer surface (28) of the collar (16), characterised in that the outer surface (28) of the collar (28) is positioned inboard of the adjacent end of the bellows (10), the collar (16) being provided at at least one circumferential location with an outwardly facing chamfered surface (34) extending from the said end towards the said surface (28) of the collar (16) but inclined in a radially outward direction for contacting the clamp (26) and guiding it onto the said outer surface (28) of the collar (16).

2. A bellows according to claim 1, characterised in that there is a second said outwardly facing chamfered surface (34) positioned at a diametrically opposite location to the first-mentioned outer chamfered surface (34).

3. A bellows according to claim 2, characterised in that the distance (A), measured in a direction diametrally of the collar (16), between the radially inward edges of the two outwardly facing chamfered surfaces (34) is less than the diameter within the clamp (26) before it is tightened.

4. A bellows according to claim 2 or 3, characterised in that the distance (B), measured in a direction diametrally of the collar, between the radially outward edges of the outwardly facing chamfered surfaces is greater than the diameter within the clamp (26) before it is tightened.

5. A bellows according to any preceding claim, characterised by at least one further said outwardly facing chamfered surface (34) positioned angularly spaced from the or each other one thereof.

6. A bellows according to claim 2 or 3, characterised by two more said outwardly-facing chamfered surfaces (34) each positioned 90° around the circumference of the collar (16) from one of the first two mentioned chamfered surfaces (34).

7. A bellows according to any preceding claim, characterised by an inwardly facing chamfered surface (38) associated with the or each outwardly facing chamfered surface (34), the inwardly facing chamfered surface (38) extending from an edge adjacent the said end of the collar (16) to a point inboard of that end and being inclined in a radially inward direction whereby to engage an edge of a circumferentially extending surface (36) of the mounting member (18) and for facilitating such mounting when the untightened clamp (26) is in position on the collar (16).

8. A bellows according to claim 7, characterised in that the angle of inclination of each said inwardly facing chamfered surface (38) lies between 15° and 35°.

9. A bellows according to any preceding claim, characterised in that the collar (16) defines a circumferentially extending inner surface (42,44,46) for contacting the mounting member (18) in use, the inner surface defining at least one circumferentially extending groove (42,44).

10. A bellows according to claim 9, characterised in that the inner surface of the collar defines two circumferentially extending grooves (42,44) separated axially of the bellows by a circumferentially extending ridge (46).

11. A bellows according to claim 10, characterised in that each groove (42,44) has the same width measured axially of the bellows and this width is the same as the width measured in the same direction of the ridge (46).

12. A bellows according to any one of claims 9 to 11, characterised in that the depth of the or each groove is less than its width.

13. A protective bellows, having a collar (16) at an end thereof for attaching that end to a mounting member (18) by means of a tightenable surrounding clamp (26) which is arranged for fitting around an outer surface (28) of the collar, characterised in that the said surface (28) is provided with a plurality of angularly separated stubs (30) adjacent but inboard of the end of the bellows and extending radially outward of the outer surface for locating the untightened clamp (26) thereon.

14. A bellows according to claim 12, characterised in that each stub (30) is connected to the end of the bellows by a chamfered surface (34) which is inclined from the radially outermost part of the stub in a radially inward direction therefrom.

15. A bellows according to claim 13, characterised in that the distance, measured in a direction diametrically of the collar (16), between the radially inward edges of the two diametrically opposite ones of the chamfered surfaces (34) is less than the diameter within the untightened clamp (26).

16. A bellows according to any one of claims 12 to 14, characterised in that each stub (30) includes a further chamfered surface (38) which extends from the said end in a radially inward direction.
